# EUROPÄISCHE PATENTANMELDUNG

(11) **EP 2 027 797 A1**
(43) Veröffentlichungstag der Anmeldung: **25.02.2009**
(21) Anmeldenummer: 08014763.0
(22) Anmeldetag: 20.08.2008
(51) Int. Cl.: A47J 31/44

(54) **Getränkebereiter**

(30) Priorität: 24.08.2007 DE 102007040311
(71) Anmelder: Miele & Cie. KG, 33332 Gütersloh (DE)
(72) Erfinder: Giezendanner, Stefan, 9054 Haslen (CH); Jungclaus, Dirk, 59302 Oelde (DE); Müller, Thomas, 8590 Romanshorn (CH); Nattkemper, Jörg, 59065 Hamm (DE)

(57) **Zusammenfassung**

Die vorliegende Erfindung betrifft einen Getränkebereiter zur Zubereitung von Getränken mit oder aus Milch, z. B. Kaffeeautomat, mit einem Gerät, mit einem Behälter (2) und zumindest einer Leitung zum Ansaugen von Milch aus dem Behälter (2) in das Gerät, wobei die Leitung zumindest aus einem Abschnitt (220, 221, 223, 224) der Leitung im Behälter (2) und einem Abschnitt der Leitung im Geräts besteht und wobei der Getränkebereiter geeignet und eingerichtet, dass der Behälter (2) in dem Gerät eingesetzt und aus diesem entnommen werden kann, wobei der Getränkebereiter zur automatischen Kupplung des Abschnitts (220, 221, 223, 224) der Leitung im Behälter (2) und des Abschnitts (72) der Leitung im Gerät beim Einsetzen des Behälters (2) in das Gerät geeignet und eingerichtet ist.

## Beschreibung

Die Erfindung betrifft einen Getränkebereiter zur Zubereitung von Getränken, zum Beispiel einen Kaffeeautomaten mit einem Gerät, mit einem Behälter und zumindest einer Leitung zum Ansaugen von Milch aus dem Behälter in das Gerät. Dabei besteht die Leitung zumindest aus einem Abschnitt der Leitung im Behälter und aus einem Abschnitt der Leitung im Gerät. Der Getränkebereiter ist so geeignet und eingerichtet, dass der Behälter in dem Gerät eingesetzt sein kann und aus diesem Gerät entnommen werden kann.

Aus den Druckschriften mit den Veröffentlichungsnummern DE 10 2005 048 164 A1 und EP 1 483 991 B1 sind Kaffeeautomaten bekannt, mit denen Getränke mit oder aus Milch zubereitet werden können.

Bei den aus dem Stand der Technik bekannten Getränkebereitern wird die Milch entweder in einer Verkaufsverpackung neben den Getränkebereiter gestellt und eine Leitung in die Verkaufsverpackung gelegt. Die Verkaufsverpackung bildet dann einen Behälter, der jedoch nicht Teil des Getränkebereiters ist. Alternativ weisen andere Getränkebereiter einen eigenen Behälter auf, der ebenfalls manuell mit einer Leitung verbunden werden muss. Gemein ist den bekannten Getränkebereitern lediglich, dass eine Leitung vorgesehen ist. Diese Leitung wird verwendet, um Milch zur Herstellung von Getränken aus Milch oder Milch enthaltende Getränke anzusaugen. Die Milch wird Zubereitungsmitteln in dem Gerät zugeführt, zum Beispiel zum Erhitzen und/oder zum Aufschäumen.

Beim Anschließen der Behälter an die Leitungen kann es oft zu Fehlern kommen. Zum einen kann es vorkommen, dass die Leitungen nicht ordnungsgemäß in den Behälter eingehängt werden und die Ansaugöffnung nicht am Boden oder im Bereich des Bodens anliegt. Die Milch kann dann nur bis zur Höhe der Ansaugöffnung der Leitung aus dem Behälter angesaugt werden.

Zum anderen kann es auch vorkommen, dass die Verbindung nicht ordnungsgemäß hergestellt wird und abrutscht oder abreißt und Milch, die in der Leitung enthalten ist, in dem Gerät verteilt wird. Das Gerät muss dann mitunter aufwändig gereinigt werden.

Hier setzt die vorliegende Erfindung an.

Der vorliegenden Erfindung liegt die Aufgabe zugrunde, einen Getränkebereiter der eingangs genannten Art so fortzubilden, dass ein manuelles Verbinden der Behälter mit Leitungen oder ein manuelles Einhängen von Leitungen in einem Behälter unnötig ist.

Diese Aufgabe wird erfindungsgemäß dadurch gelöst, dass der Getränkebereiter zur automatischen Kupplung des Abschnitts der Leitung im Behälter und des Abschnitts der Leitung im Gerät beim Einsetzen des Behälters in das Gerät geeignet und eingerichtet ist. Ein manuelles Verbinden oder Einhängen der Leitung des Geräts mit dem Behälter beziehungsweise in den Behälter ist dann nicht mehr notwendig. In dem Moment, in dem der Behälter in das Gerät eingesetzt ist, ist automatisch die Kupplung des Abschnitts der Leitung im Behälter mit dem Abschnitt der Leitung im Gerät hergestellt.

Ein erfindungsgemäßer Getränkebereiter kann geeignet und eingerichtet sein, dass das Gerät und der Behälter aufgrund der auf den Behälter einwirkenden Schwerkraft automatisch gekuppelt werden. Die Schwerkraft kann dann den Behälter auch in seiner gekuppelten Stellung im Gerät halten. Ein Verriegeln des Behälters in der gekuppelten Stellung mit Verriegelungsmitteln kann entfallen, kann aber auch zusätzlich vorgesehen sein.

Der Abschnitt der Leitung im Behälter und der Abschnitt der Leitung im Gerät können an ihren zugewandten Enden zur automatischen Kupplung jeweils ein Kupplungsmittel aufweisen. Die Kupplungsmittel können geeignet und eingerichtet sein, aufgrund der auf den in das Gerät eingesetzten Behälter einwirkenden Schwerkraft automatisch gekuppelt zu sein. Das Kupplungsmittel des Abschnitts der Leitung im Behälter oder des Abschnitts der Leitung im Gerät kann einen Stutzen umfassen. Das Kupplungsmittel des Abschnitts der Leitung im Gerät beziehungsweise im Behälter kann dagegen eine Buchse umfassen. Der Stutzen kann dann zur Kupplung der Abschnitte der Leitungen formschlüssig in die Buchse eingreifen. Gemäß der Erfindung kann der Stutzen und/oder die Buchse ganz oder teilweise aus einem elastischen, vorzugsweise aus einem weichelastischen Werkstoff hergestellt sein. Denkbar sind beispielsweise Stutzen und/oder Buchsen aus Silikon.

Ein erfindungsgemäßer Getränkebereiter kann einen Füllstandssensor aufweisen. Der Füllstandssensor kann im Behälter einen Sensorstab und im Gerät eine Sensorleitung umfassen. Auch der Sensorstab und die Sensorleitung können zur automatischen Kupplung geeignet und eingerichtet sein. Der Sensorstab kann dazu beispielsweise an seinem der Sensorleitung zugewandten Ende einen Bolzen aufweisen. Die Sensorleitung kann im Gegenzug an ihrem dem Sensorstab zugewandten Ende eine Buchse aufweisen. Zur Kupplung des Sensorstabs mit der Sensorleitung kann dann der Bolzen formschlüssig in die Buchse eingreifen.

Das Gerät eines erfindungsgemäßen Getränkebereiters kann eine Aufnahmeausnehmung aufweisen, in welche der Behälter herausnehmbar eingesetzt ist. Am Rand der Aufnahmeausnehmung sind vorzugsweise die Kupplungsmittel des Geräts angeordnet.

Das Gerät kann im Bereich der Aufnahmeausnehmung einen Positionierungsdorn und der Behälter eine komplementäre Positionierungsausnehmung aufweisen, welche das automatische Positionieren des Behälters beim Einsetzen vorgibt und damit das Kuppeln von Behälter beziehungsweise der Abschnitte der Leitungen und der Abschnitte der Leitungen im Gerät einerseits und des Sensorstabs und der Sensorleitung andererseits gewährleisten.

Die Aufnahmeausnehmung kann eine ovale lichte Querschnittsfläche haben. Ebenso ist es möglich, dass der Behälter im Querschnitt eine ovale Kontur hat, welche der lichten Querschnittsfläche der Aufnahmeausnehmung entspricht.

Ein erfindungsgemäßes Beispiel für einen Getränkebereiter zur Zubereitung von Getränken ist anhand der Figuren näher erläutert. Es zeigt:

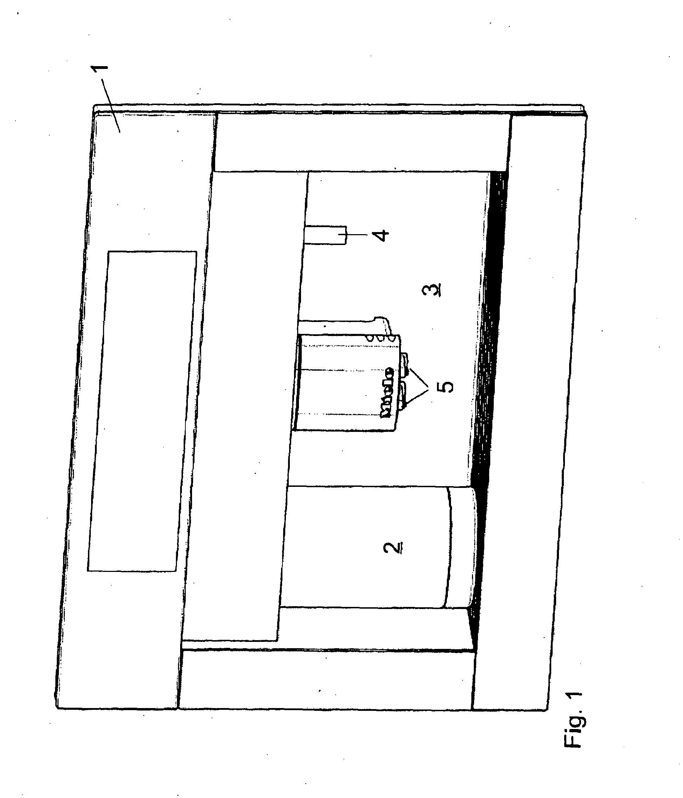

Fig. 1 eine Frontansicht einer Tür des erfindungsgemäßen Getränkebereiters,
Fig. 2 eine Rückansicht der Tür des erfindungsgemäßen Getränkebereiters,
Fig. 3 eine perspektivische Darstellung eines Behälters des Getränkebereiters,
Fig. 4 eine Explosionsdarstellung des Behälters,
Fig. 5 eine perspektivische Ansicht eines Deckels des Behälters,
Fig. 6 eine Explosionsdarstellung des Deckels,
Fig. 7 je einen Abschnitt von zwei Leitungen des Getränkebereiters,
Fig. 8 die Enden der Leitungen in einer Explosionsdarstellung,
Fig. 9 eine perspektivische Ansicht des in eine Aufnahmeausnehmung eingesetzten Behälters unter Vernachlässigung wesentlicher Teile des Deckels des Behälters,
Fig. 10 eine Darstellung entsprechend Fig. 9 jedoch mit nicht gekuppelten Leitungen und Sensorstäben,
Fig. 11 eine weitere Darstellung entsprechend Fig. 9, jedoch mit gekuppelten Leitungen und Sensorstäben.

Der erfindungsgemäße Getränkebereiter umfasst ein Gerät, in welchem die Getränke zubereitet werden, und das als Standgerät oder als Einbaugerät ausgestaltet sein kann. Das Gerät weist ein Gehäuse auf, in dem verschiedene Komponenten des Geräts untergebracht sind. Das Gehäuse umfasst eine Tür 1, die auf der Frontseite des Geräts vorgesehen ist, und die zu Wartungszwecken und zum Zwecke des Nachfüllens von verschiedenen Getränkezutaten geöffnet werden kann. Weitere Teile des Gehäuses oder in dem Gehäuse angeordneter Komponenten des Geräts sind in den Figuren nicht dargestellt.

Neben dem Gerät umfasst der Getränkebereiter einen als Milchbehälter ausgebildeten Behälter 2, der während des Betriebs des Getränkgebereiters in das Gerät beziehungsweise in die Tür 1 des Geräts eingesetzt ist. Aus dem Milchbehälter 2 wird, sofern ein Getränk aus Milch oder ein Getränk das Milch enthält zubereitet werden soll, Milch entnommen.

Die Getränke werden in einem Ausgabebereich 3 abgezapft, wofür der Getränkebereiter verschiedene Ausgabedüsen 4, 5 aufweist. Der Ausgabebereich 3 ist in einer Nische der Tür 1 vorgesehen, in welche die verschiedenen Ausgabedüsen 4, 5 deckenseitig einmünden.

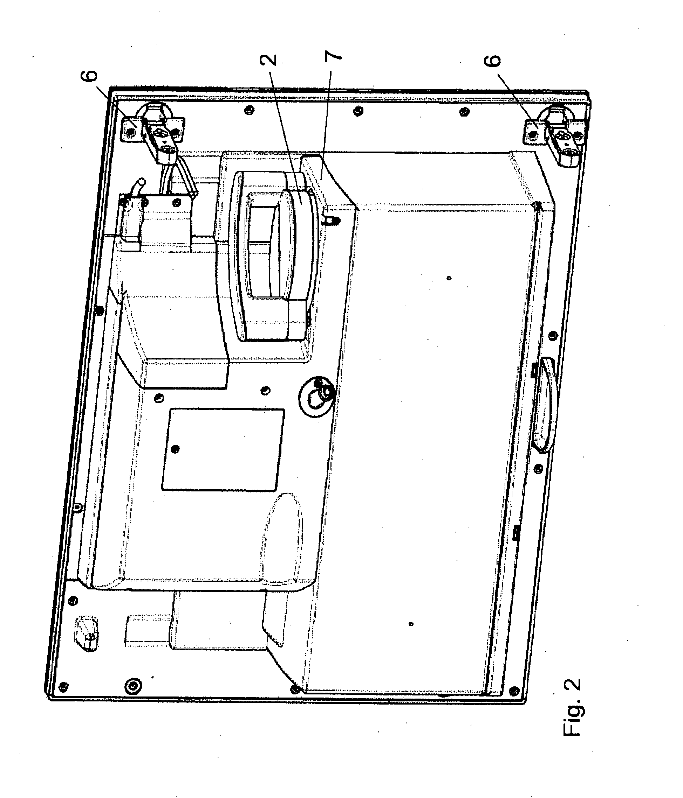

Die Tür 1 ist über Scharniere 6 mit dem übrigen Gehäuse verbunden (Fig. 2).

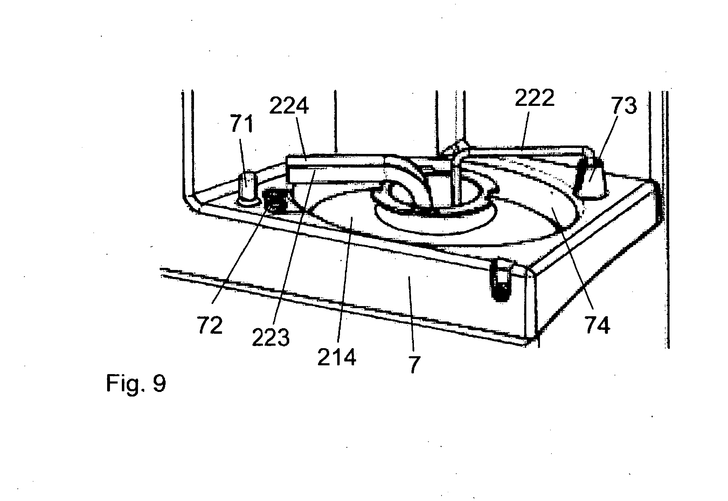

Auf der Innenseite der Tür 1 ist ein Aufnahmeteil 7 vorgesehen, in welchem eine Aufnahmeausnehmung 74 vorgesehen ist. Siehe Fig. 9. Diese Aufnahmeausnehmung 74 ist als Durchgangsloch ausgestaltet und mündet deckenseitig in der Nische des Ausgabebereichs 3 auf der Frontseite der Tür 1.

In die Aufnahmeausnehmung ist der Milchbehälter 2 eingesetzt. Der Milchbehälter 2 durchgreift die Aufnahmeausnehmung 74 und ragt in die Nische des Ausgabebereichs 3 hinein. Ein Teil des Milchbehälters 2 ist daher von außen erkennbar.

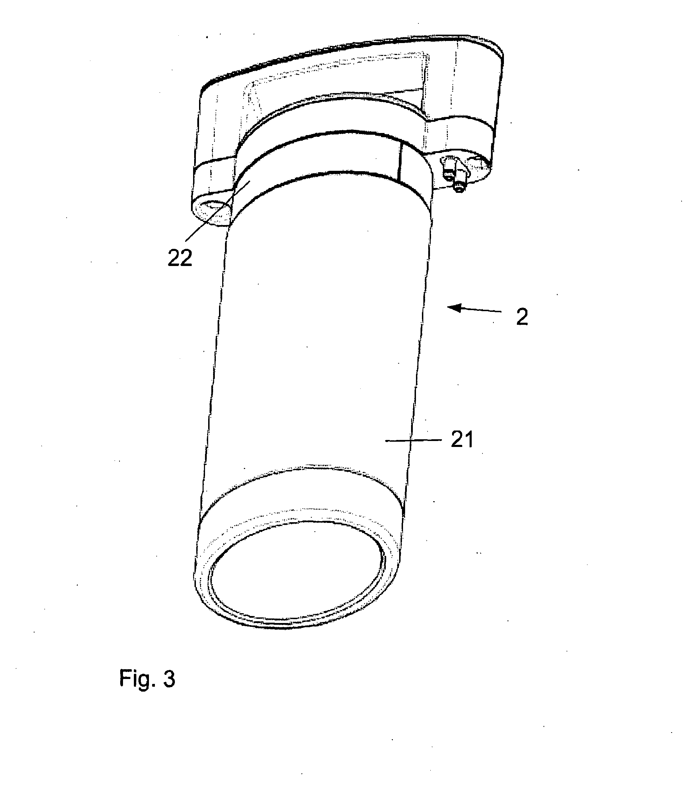

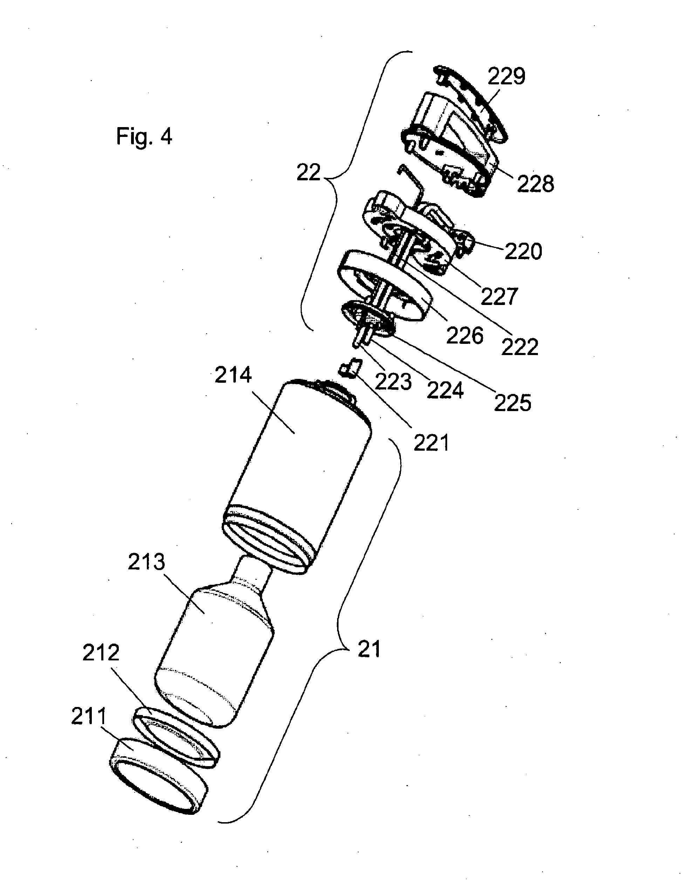

Der Milchbehälter (Fig. 3 und 4) umfasst ein Isoliergefäß 21 und einen Deckel 22. Das Isoliergefäß 21 ist aus einem ersten Bodenteil 211, einem zweiten Bodenteil 212, einem Innengefäß 213 und einem Außengefäß 214 zusammengesetzt. Das erste Bodenteil 211 und das zweite Bodenteil 212 sind ringförmig ausgebildet. Das zweite Bodenteil 212 kann in das erste Bodenteil 211 eingesetzt werden. Das Innengefäß 213 ruht auf dem zweiten Bodenteil 212, während das Außengefäß 214 auf dem Fachmann bekannte Weise mit dem ersten Bodenteil 211 verbunden ist. Das Außengefäß 214 haust das Innengefäß 213 ein, so dass das Innengefäß 213 durch das Außengefäß 214 gegen Beschädigungen geschützt ist.

Bei abgenommenem Deckel 22 kann in das Isoliergefäß 21 Milch eingefüllt werden. Nach dem Einfüllen wird dann das Isoliergefäß 21 mit dem Deckel 22 verschlossen, wozu ein Verschlussmechanismus genutzt wird, der nicht näher beschrieben wird.

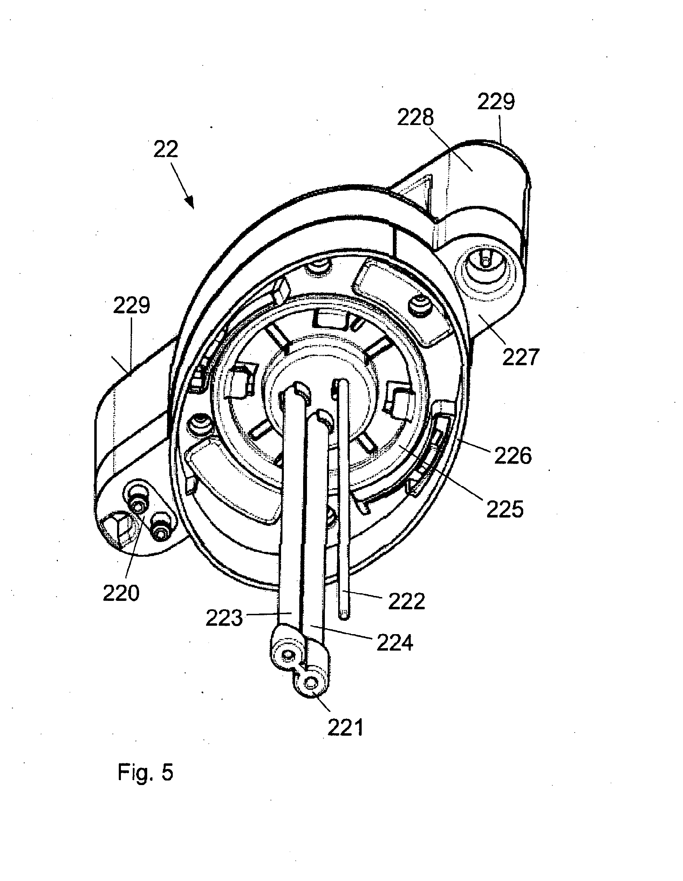

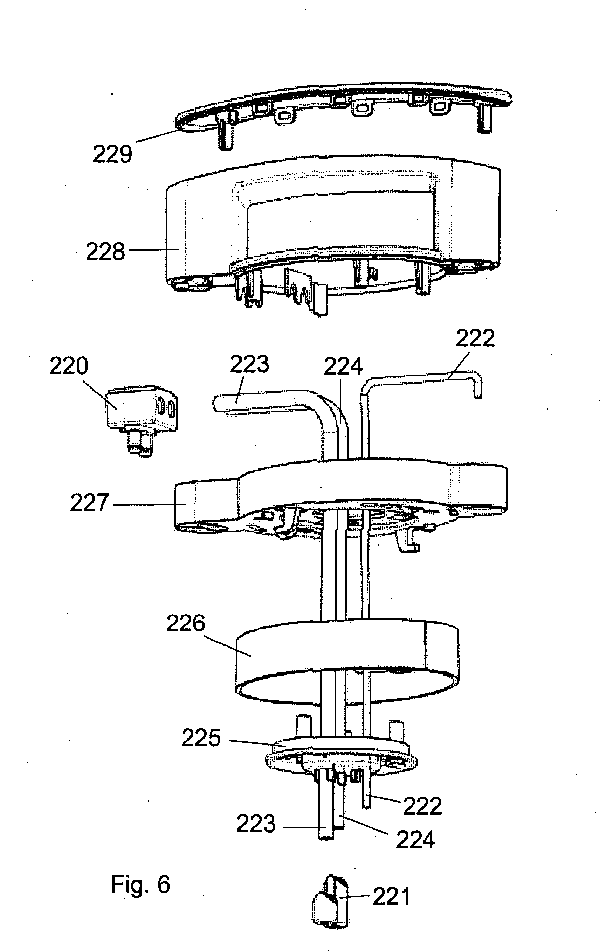

Der Deckel (Fig. 4, Fig. 5 und Fig. 6) umfasst als Teile des Mechanismus zur Verbindung mit dem Isoliergefäß 21 ein erstes Verriegelungsteil 225, ein zweites Verriegelungsteil 226 und ein drittes Verriegelungsteil 227, die zum Teil gegeneinander schwenkbar auf nicht näher erläuterte Art und Weise miteinander verbunden sind. Auf dem dritten Verriegelungsteil 227 ist ein Bügelteil 228 aufgesetzt, das mit einem Abdeckungsteil 229 verbunden ist. An dem Bügelteil 228 ist ein Handgriff ausgebildet, an welchem der Milchbehälter 2 zum Transport ergriffen werden kann.

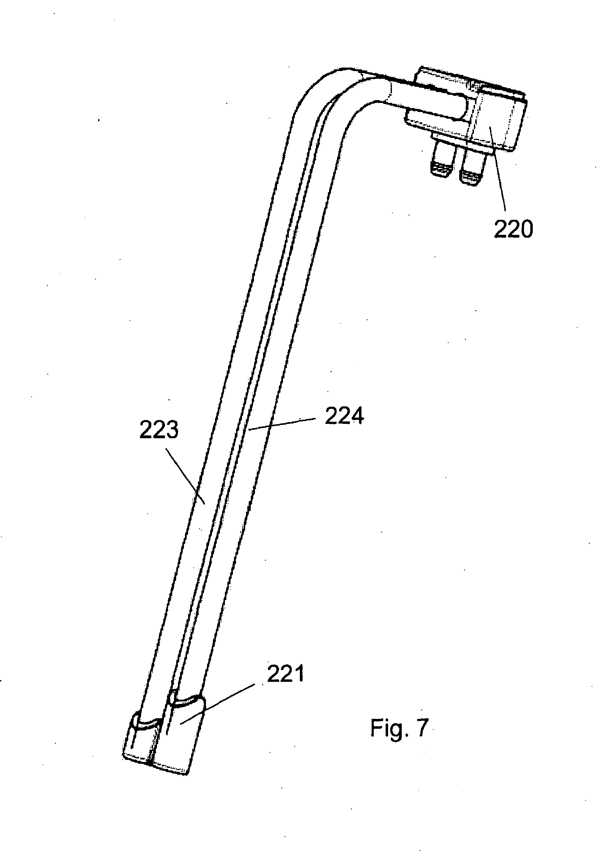

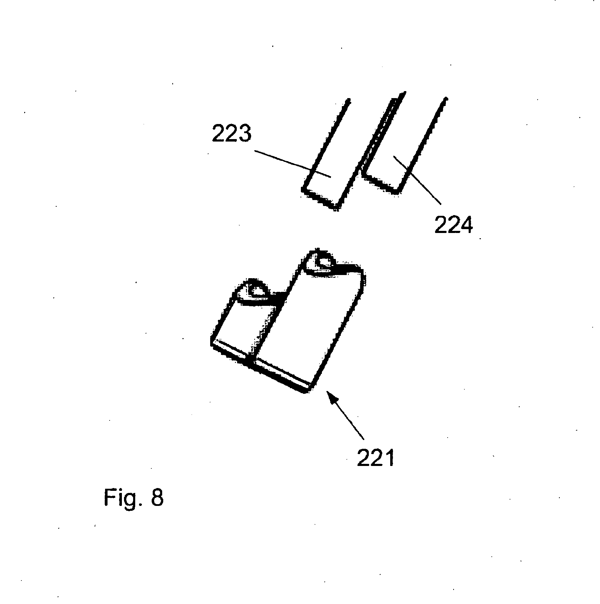

Durch das erste Verriegelungsteil 225, das zweite Verriegelungsteil 226 und das dritte Verriegelungsteil 227 ist jeweils ein Abschnitt 220, 221, 223, 224 von zwei Milchleitungen hindurchgeführt. Über die Milchleitungen kann dem Milchbehälter 2 Milch entnommen und dem Gerät zugeführt werden. Die Abschnitte 220, 221, 223, 224 der Milchleitungen (Fig. 7, Fig. 8) weisen zwei L-förmig gebogene Rohre 223, 224, zwei Endteile 221 und ein Kupplungsmittel 220 auf. Die Endteile 221 sind miteinander fest verbunden und als ein Kunststoffspritzteil hergestellt. Die Endteile 221 sind an den Enden der längeren Schenkel der Rohre 223, 224 angebracht.

Die längeren Schenkel der Rohre 223, 224 sind ungleich lang. Der längere Schenkel des ersten Rohres 223 ist nämlich länger als der längere Schenkel des zweiten Rohres 224.

Die Endteile 221 sind komplementär zu den Enden der Rohre 223, 224 ausgebildet. Das Endteil, welches dem ersten Rohr 223 zugeordnet ist, ist kürzer als das Endteil, welches dem zweiten Rohr 224 zugeordnet ist. Damit ist sichergestellt, dass die beiden Rohre 223, 224 mit dem jeweils ihnen zugeordneten Endteil 221 verbunden sind. Dieses ist von Bedeutung, da die Ansaugöffnungen, welche in den Endteilen 221 vorgesehen sind unterschiedlich ausgebildet sind. Die Ansaugöffnung des einen Endteils hat einen größeren Querschnitt als die Ansaugöffnung des anderen Endteils. Der Querschnitt der Ansaugöffnung hat einen Einfluss auf den Volumenstrom, der über die Abschnitte 220, 221, 223, 224 der Milchleitungen gefördert werden kann. Je nach dem wie die Milch in dem Gerät verwendet werden soll, ist eine größere Milchmenge notwendig. Die Menge der aus dem Milchbehälter 2 angesaugten Milch wird somit zum Teil auch über die Wahl des Querschnitts der Ansaugöffnung in den Endteilen 221 bestimmt.

Das Kupplungsstück 220 dient der Verbindung der Abschnitte 220, 221, 223, 224 der Milchleitungen im Deckel 22 mit weiterführenden Abschnitten der Milchleitungen im Gerät. Von diesen weiterführenden Abschnitten ist lediglich ein zum Kupplungsmittel 220 komplementäres Kupplungsmittel 72 dargestellt (Fig. 9 bis 11).

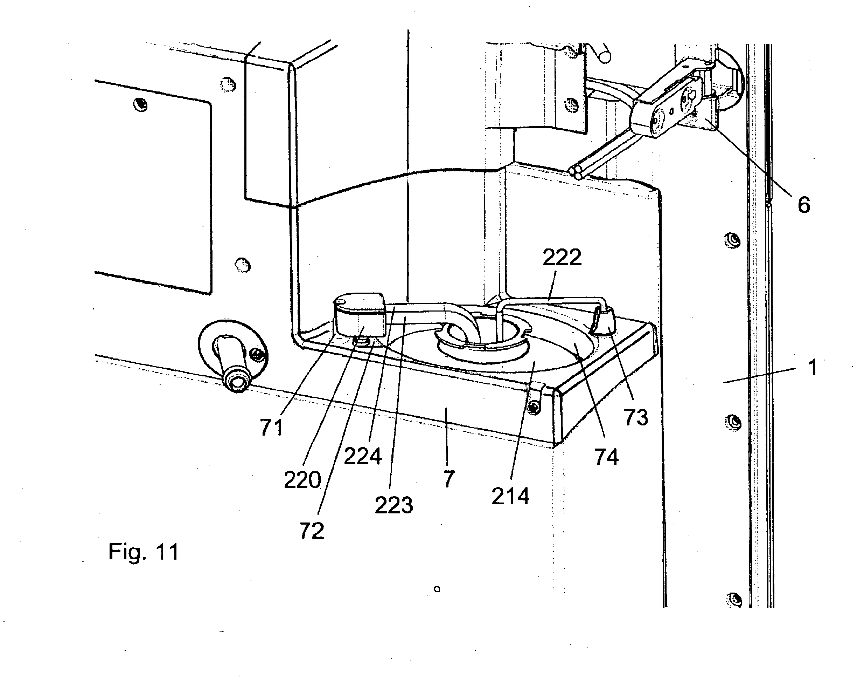

Im Deckel 22 des Milchbehälters 2 ist ein Sensorstab 222 eines kapazitiven Füllstandssensors angeordnet (Fig. 11). Der Sensorstab 222 ist ebenfalls L-förmig gebogen, wobei der längere Schenkel parallel zu den längeren Schenkeln der Rohre 223, 224 in das Isoliergefäß 21 hineinragt. Der kürzere Schenkel liegt mit den kürzeren Schenkeln der Rohre 223, 224 in etwa in einer Ebene, läuft jedoch in die entgegengesetzte Richtung. Das Ende des kürzeren Schenkels des Sensorstabes 222 ist rechtwinklig nach unten abgekröpft. Das abgekröpfte Ende hat die Form eines Bolzens und dieser dient der Verbindung des Sensorstabes 222 mit einer nicht dargestellten Sensorleitung im Gerät, wozu am Aufnahmeteil 7 des Geräts eine Buchse 73 zur Kupplung des Sensorstabs 222 und der Sensorleitung vorgesehen ist. Die Buchse 73 liegt auf der gegenüberliegenden Seite des geräteseitigen Kupplungsmittels 72 der Milchleitungen. Dadurch ist eine Entkopplung der elektrischen Signale, die über die Sensorleitungen beziehungsweise den Sensorstab 222 geführt werden, und der Flüssigkeit, die durch die Milchleitungen geführt wird, gewährleistet.

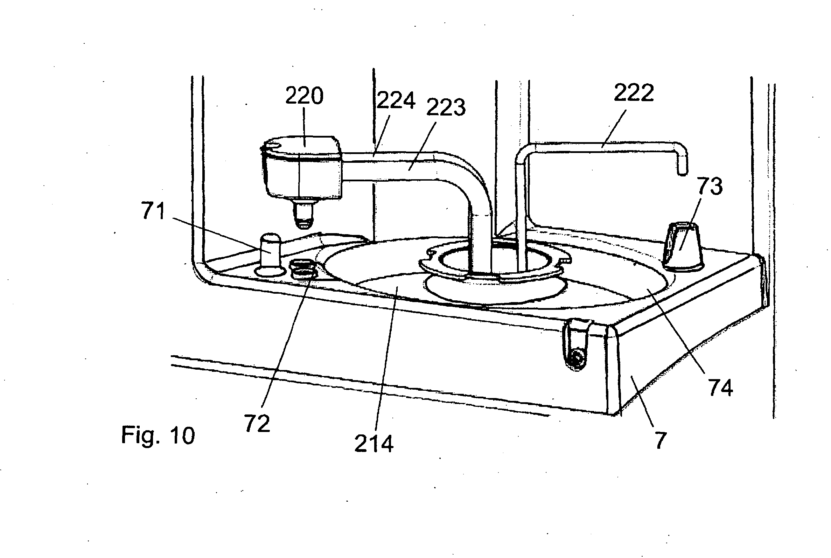

Im Bereich des geräteseitigen Kupplungsmittels 72 ist ein Positionierdorn 71 vorgesehen, der in eine komplementäre Positionierbuchse im Deckel 22 eingreift. Diese Positionierbuchse ist zum Teil durch das deckelseitige Kupplungsmittel 220 gebildet (Fig. 10, Fig. 11).

Die Aufnahmeausnehmung 74 für den Milchbehälter 2 im Aufnahmeteil 7 der Tür 1 ist so ausgerichtet, dass der Milchbehälter 2 aufgrund der Schwerkraft in der Aufnahmeausnehmung 74 gehalten wird. Zugleich gewährleistet die Schwerkraft, dass die Abschnitte 220, 221, 223 und 224 der Milchleitungen im Milchbehälter 2 und der Sensorstab 222 automatisch mit den Milchleitungen beziehungsweise der Sensorleitung im Gerät gekoppelt wird. Das Einsetzen des Milchbehälters 2 ist aufgrund seiner ovalen Querschnittsform des Außengefäßes 214 und des dementsprechenden lichten Querschnitts der Aufnahmeausnehmung 74 und aufgrund des Positionierdorns 71 und der Positionierbuchse immer nur so möglich, da ein korrektes Einsetzen des Milchbehälters 2 in die Aufnahmeausnehmung 74 gewährleistet ist. Sofern das untere Ende des Milchbehälters 2 in die Aufnahmeausnehmung 74 mit der richtigen Orientierung eingesetzt ist, rutschen zur Verbindung der Abschnitte der Milchleitungen Stutzen an dem Kupplungsmittel 220 automatisch in Buchsen des Kupplungsmittels 72 einerseits und zur Verbindung des Sensorstabs 222 mit der Sensorleitung der Bolzen des Sensorstabs 222 in die Buchse 73 andererseits.

Zumindest eines der Kupplungsmittel 220, 72 ist weichelastisch ausgeführt, vorzugsweise die Stutzen des milchbehälterseitigen Kupplungsmittels 220, so dass eine dichte Verbindung der Abschnitte der Milchleitungen möglich ist, über welche die Milch aus dem Milchbehälter 2 angesaugt werden kann.

Die Kupplungen zwischen den geräteseitigen und milchbehälterseitigen Abschnitten der Milchleitungen und dem Sensorstab 222 und der Buchse 73 werden somit ohne weitere Handgriffe beim Einsetzen des Milchbehälters 2 in die Aufnahmeausnehmung 74 hergestellt.

## Patentansprüche

1. Getränkebereiter zur Zubereitung von Getränken, z. B. Kaffeeautomat, mit einem Gerät, mit einem Behälter (2) und zumindest einer Leitung zum Ansaugen einer Flüssigkeit aus dem Behälter (2) in das Gerät, wobei die Leitung zumindest aus einem Abschnitt (220, 221, 223, 224) der Leitung im Behälter (2) und einem Abschnitt der Leitung im Gerät besteht und wobei der Getränkebereiter geeignet und eingerichtet ist, dass der Behälter (2) in dem Gerät eingesetzt und aus diesem entnommen werden kann,
**dadurch gekennzeichnet, dass**
der Getränkebereiter zur automatischen Kupplung des Abschnitts (220, 221, 223, 224) der Leitung im Behälter (2) und des Abschnitts (72) der Leitung im Gerät beim Einsetzen des Behälters (2) in das Gerät geeignet und eingerichtet ist, wobei das Gerät und der Behälter (2) aufgrund der auf den in das Gerät eingesetzten Behälter (2) einwirkenden Schwerkraft automatisch gekuppelt sind.

2. Getränkebereiter nach Anspruch 1, **dadurch gekennzeichnet, dass** der Abschnitt (220, 221, 223, 224) der Leitung im Behälter (2) und der Abschnitt (72) der Leitung im Gerät an ihren zugewandten Enden zur automatischen Kupplung jeweils ein Kupplungsmittel (220, 72) aufweisen.

3. Getränkebereiter nach Anspruch 2, **dadurch gekennzeichnet, dass** die Kupplungsmittel (220, 72) geeignet und eingerichtet sind aufgrund der auf den in das Gerät eingesetzten Behälter (2) einwirkenden Schwerkraft automatisch gekuppelt zu sein.

4. Getränkebereiter nach Anspruch 2 oder 3, **dadurch gekennzeichnet, dass** das Kupplungsmittel (220) des Abschnitts (220, 221, 223, 224) der Leitung im Behälter (2) einen Stutzen umfasst.

5. Getränkebereiter nach einem der Ansprüche 2 bis 4, **dadurch gekennzeichnet, dass** das Kupplungsmittel (72) des Abschnitts der Leitung im Gerät eine Buchse aufweist.

6. Getränkebereiter nach Anspruch 4 oder 5, **dadurch gekennzeichnet, dass** der Stutzen zur Kupplung der Abschnitte der Leitungen formschlüssig in die Buchse (72) eingreift.

7. Getränkebereiter nach Anspruch 6, **dadurch gekennzeichnet, dass** der Stutzen und/oder die Buchse (72) ganz oder teilweise aus einem elastischen Werkstoff hergestellt ist/sind.

8. Getränkebereiter nach einem der Ansprüche 1 bis 7, **dadurch gekennzeichnet, dass** der Getränkebereiter einen Füllstandsensor aufweist, der am Behälter einen Sensorstab (222) und im Gerät eine Sensorleitung umfasst.

9. Getränkebereiter nach Anspruch 8, **dadurch gekennzeichnet, dass** der Sensorstab (222) und die Sensorleitung zur automatischen Kupplung geeignet und eingerichtet sind.

10. Getränkebereiter nach Anspruch 9, **dadurch gekennzeichnet, dass** der Sensorstab (222) an seinem der Sensorleitung zugewandten Ende einen Bolzen aufweist.

11. Getränkebereiter nach Anspruch 9 oder 10, **dadurch gekennzeichnet, dass** die Sensorleitung an ihrem der Sensorstab (222) zugewandten Ende eine Buchse (73) aufweist.

12. Getränkebereiter nach Anspruch 10 oder 11, **dadurch gekennzeichnet, dass** der Bolzen zur Kupplung des Sensorstabs (222) mit der Sensorleitung formschlüssig in die Buchse (73) eingreift.

13. Getränkebereiter nach einem der Ansprüche 1 bis 12, **dadurch gekennzeichnet, dass** Gerät eine Aufnahmeausnehmung (74) aufweist, in welche der Behälter (2) herausnehmbar eingesetzt ist.

14. Getränkebereiter nach Anspruch 13, **dadurch gekennzeichnet, dass** am Rand der Aufnahmeausnehmung (74) die Kupplungsmittel (72, 73) des Geräts angeordnet sind.

15. Getränkebereiter nach einem der Ansprüche 1 bis 14, **dadurch gekennzeichnet, dass** das Gerät einen Positionierungsdorn (71) und der Behälter. (2) eine komplementäre Positionierungsausnehmung aufweist.
